# NEUE EUROPÄISCHE PATENTSCHRIFT

(11) **EP 1 678 026 B2**
(45) Veröffentlichungstag und Bekanntmachung des Hinweises auf die Entscheidung über den Einspruch: **09.04.2014**
(45) Hinweis auf die Patenterteilung: 16.07.2008
(21) Anmeldenummer: 04789924.0
(22) Anmeldetag: 06.10.2004
(51) Int. Cl.: B62D 25/08, B62D 25/20, B62D 37/00, F16F 7/08, F16F 9/12, F16F 15/03

(54) **KRAFTFAHRZEUG MIT AUSSTEIFUNGSSTREBEN**
MOTOR VEHICLE PROVIDED WITH A STIFFENER STRUT
VEHICULE COMPORTANT DES ENTRETOISES DE RIGIDIFICATION

(30) Priorität: 11.10.2003 DE 10347365
(43) Veröffentlichungstag der Anmeldung: 12.07.2006
(73) Patentinhaber: Wilhelm Karmann GmbH, 49084 Osnabrück (DE)
(72) Erfinder: BUNSMANN, Winfried, 49143 Bissendorf (DE); KALINKE, Peter, 49076 Osnabrück (DE)
(74) Vertreter: Kronthaler, Schmidt & Coll.
(86) Internationale Anmeldenummer: PCT/DE2004/002213
(87) Internationale Veröffentlichungsnummer: WO 2005/035334

(56) Entgegenhaltungen:
- EP-A- 0 715 984
- EP-A- 1 147 970
- EP-A2- 1 209 062
- WO-A-03/060344
- WO-A-2004/104442
- DE-A1- 3 543 492
- DE-A1- 10 002 619
- US-A- 3 211 491
- US-A1- 2002 056 969
- US-B1- 6 340 153

## Beschreibung

Die Erfindung betrifft ein Kraftfahrzeug, insbesondere ein Cabriolet-Fahrzeug, nach dem Oberbegriff des Anspruchs 1. Aus der US-A-3 211 491 ist bereits ein gattungsgemäßes Fahrzeug bekannt.

Bei Kraftfahrzeugen stellt sich allgemein das Problem, daß im Fahrbetrieb auftretende äußere Anregungen von Karosseriebewegungen, etwa beim Überfahren von Fahrbahnunebenheiten, zum Beispiel Schlaglöchern oder aufwärts ragenden Schwellen, unerwünschte Schwingungen des Fahrzeugaufbaus auslösen können. Solche Schwingungen im Fahrzeugaufbau mindern Fahrsicherheit und - komfort. Dieses Problem tritt in besonderem Maß bei Cabriolet-Fahrzeugen mit einer selbsttragenden Karosserie auf, die aufgrund des nicht starren Daches, das vor allem im geöffneten Zustand die Karosserie nicht aussteifen kann, einen Stabilitätsnachteil gegenüber geschlossenen Fahrzeugaufbauten aufweisen. Grundsätzlich stellt es sich jedoch bei allen Fahrzeugen, auch bei solchen, die keine selbsttragende Karosserie haben, etwa auch bei Rahmenfahrzeugen, zum Beispiel Motorrädern oder Fahrzeugen mit Aluminiumkarosserien, die ganz oder teilweise von einem Profilrahmen unterstützt sind.

Es ist bekannt, gegen den Aufbau von Schwingungen sog. Schwingungstilger vorzusehen, d.h. Dämpfungsmassen, die jeweils geeignet sind, Schwingungen bestimmter Frequenzen, auf die die Tilger abgestimmt sind, zu dämpfen. Die Abstimmung ist jeweils nur auf eine bestimmte einzelne Frequenz möglich; zudem ist eine Anpassung an den jeweiligen Fahrzeugtyp erforderlich, wobei die Anordnung der Tilger in Karosseriehohlräumen konstruktiv schwierig ist. Die Tilger selbst müssen eine große Masse haben, was einem gewünschten geringen Fahrzeuggewicht und einem sparsamen Betrieb entgegenwirkt.

Die DE 198 20 617 C2 zeigt die Möglichkeit, einzelne, in sich längenvariable Streben einer selbsttragenden Karosserie oder eines Fahrzeugrahmens mit einer Aufnahmeeinheit für eine äußere Längsbeanspruchung der jeweiligen Strebe, einem Stellglied zum Bewirken einer aktiven Gegenkraft und einer Steuereinheit für das Stellglied auszurüsten. Dadurch kann selektiv der äußeren Schwingungsanregung mit kurzen Ansprechzeiten entgegengewirkt werden. Allerdings erfordert dieses einen hohen konstruktiven Aufwand, da für jede Strebe Steuereinheiten und Stellglieder vorgesehen werden und jeweils mit Energie für ihren Einsatz versorgt werden müssen.

Die DE 100 02 619 A1 zeigt eine kompensationseinrichtung, der eine Streckung oder Stauchung einer Strebe bewirkt bzw. dämpft. Die Anregung hierzu kommt von außen, nämlich über eine Dämpferanordnung, die im Fahrwerk befindlich ist. Sie ist über eine Druckmittelleitung mit der Kompensationseinrichtung verbunden.

Die US-A-3 211 491 zeigt die Möglichkeit, einer über Flansche eingeleiteten Kraft zur Streckung oder Stauchung einer Strebe 23 durch eine viskoelastische Zwischenlage hemmend entgegenzuwirken.

Der Erfindung liegt das Problem zugrunde, bei einem Kraftfahrzeug der genannten Art das Entgegenwirken gegen äußere Schwingungsanregungen zu vereinfachen.

Die Erfindung löst dieses Problem durch ein Kraftfahrzeug mit den Merkmalen des Anspruchs 1. Vorteilhafte Ausgestaltungen des Gegenstandes der Erfindung ergeben sich aus den weiteren Ansprüchen 2 bis 5.

Mit der erfindungsgemäßen Ausbildung kann für ein Fahrzeug mit ganz oder teilweise selbsttragender Fahrzeugkarosserie eine Schwingungsverminderung durch eine rein passive Hemmung einer Streckung oder Stauchung von Streben, also langerstreckten Strukturen der Karosserie oder des Rahmens, ohne die Notwendigkeit einer eigenen Energieversorgung von Stellgliedern oder Aufnahmeeinheiten an diesen Streben erreicht werden. Derartige Bauteile sind vollständig entbehrlich, was Konstruktion und Montage zusätzlich vereinfacht. Durch das Vorsehen eines Energiespeichers wird die aus der Bewegung der Karosseriestrebe(n) gewonnene Energie zwischengespeichert und kann für andere Zwecke genutzt werden. Ein Energiewandler kann etwa dadurch geschaffen sein, daß der bewegliche Teil der Strebe nach Art eines Kolbens in Fluid eintaucht und dieses bei Längsbeanspruchung der Strebe bewegt. Vorteilhaft kann das Fluid dann über einen Propeller geleitet werden und durch dessen Drehung elektrische Energie erzeugen. Die von außen eingeleitete Energie bleibt dann nicht mehr ungenutzt.

Sofern die Strebe(n) als von der eigentlichen, beispielsweise selbsttragenden, Karosserie gesonderte Aussteifungsbauteile ausgebildet ist oder sind, kann eine Montage der Strebe(n) mit dem jeweiligen Energiewandler nach Art eines vorgefertigten Moduls unter dem Fahrzeugboden erfolgen. Zudem kann jede Strebe damit auch außerhalb des jeweiligen Schwingungsabbaus die Funktion eines aussteifenden Bauteils bei einem Fahrzeug mit etwa selbsttragender Karosserie erfüllen. Die Streben können auch Bestandteil eines tragenden Rahmens sein. Bei Fahrzeugen mit mehreren Aussteifungsstreben kann auch ein Teil erfindungsgemäß und ein anderer Teil herkömmlich ausgebildet sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Ansicht eines Unterbodens eines Kraftfahrzeugs von unten mit im wesentlichen diagonal erstreckten Aussteifungsstreben,
- Fig. 2: eine ähnliche Ansicht wie Fig. 1 mit jeweils zwei in einen gemeinsamen Energiewandler einmündenden Streben,
- Fig. 4: eine Detailansicht eines beweglichen Strebenteils, der nach Art eines Kolbens in einen ein Fluid umfassenden Energiewandler eingreift,

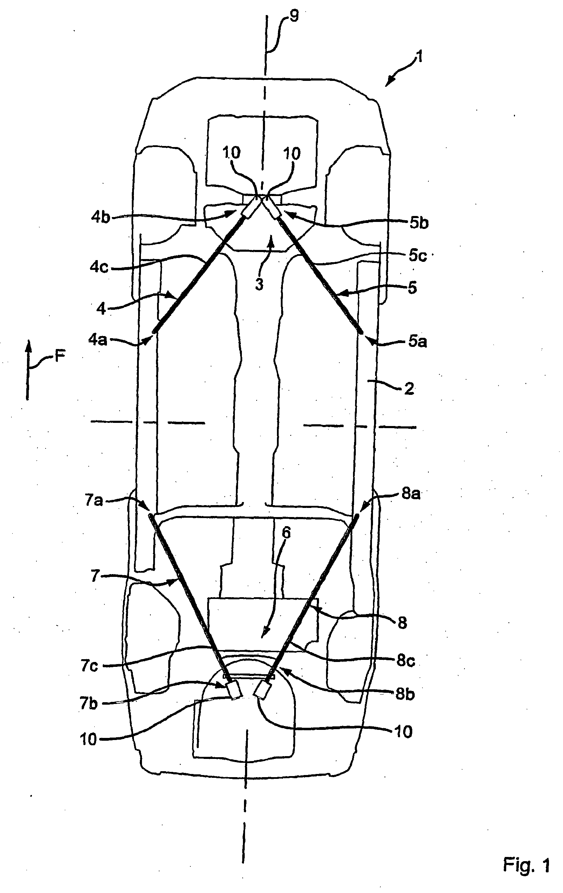

Gemäß dem gezeichneten. Ausführungsbeispiel nach Figur 1 ist der Bodengruppe 2 eines Fahrzeugs 1 ein vorderes Paar 3 von Aussteifungsstreben 4, 5 und ein hinteres Paar 6 von Aussteifungsstreben 7, 8 zugeordnet, die jeweils im wesentlichen diagonal verlaufen. Diese Anzahl und Anordnung von Streben ist nicht zwingend und nur beispielhaft.

Die Paare 3, 6 sind hier ungefähr jeweils symmetrisch bezüglich einer vertikalen Längsmittelebene 9. Ihre Streben 4, 5 bzw. 7, 8 erstrecken sich von äußeren Randbereichen des Bodens 2 bis nahe an die vertikale Längsmittelebene 9. Sie sind hier jeweils als von dem Boden 2 gesonderte Profile, etwa Rohr- oder Kastenprofile, aus Metall oder etwa auch einem faserverstärkten Kunststoff ausgebildet. Die Form der Streben 4, 5, 7, 8 kann von der hier gezeigten Geradlinigkeit erheblich abweichen. Auch etwa abgewinkelte und/oder bereichsweise flächige Bauteile kommen in Betracht.

Die Streben 4, 5, 7, 8 sind an ihren in Querrichtung auswärts weisenden Enden 4a, 5a, 7a, 8a mit dem Boden 2 verbunden. Hierfür können die Enden als abgeflachte Flanschbereiche ausgebildet sein, die jeweils eine Bohrung zum Durchgriff eines Befestigungsmittels aufweisen. Auch ein Verschweißen oder andersartiges Festlegen der Streben 4, 5, 7, 8 an der Karosserie ist möglich.

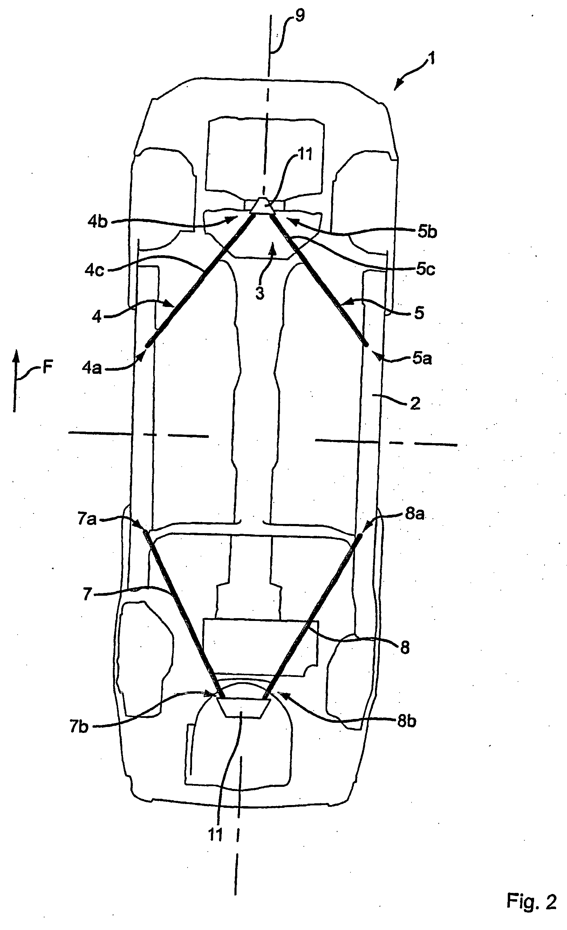

Mit ihren der Karosserieanbindung gegenüber gelegenen Endbereichen 4b, 5b, 7b, 8b sind die Streben 4, 5 des Paares 3 bzw. 7, 8 des Paares 6 jeweils an und relativbeweglich zu einem Energiewandler 10, 11 gehalten, der seinerseits an der Fahrzeugkarosserie gehalten ist. Gemäß Figur 1 ist dabei jeder Strebe 4, 5, 7, 8 genau ein Energiewandler 10, 10b als Halterung zugeordnet. Im Ausführungsbeispiel nach Figur 2 münden immer zwei Streben 4, 5 eines Paares 3 bzw. 7, 8 eines Paares 6 in einen gemeinsamen Energiewandler 11.

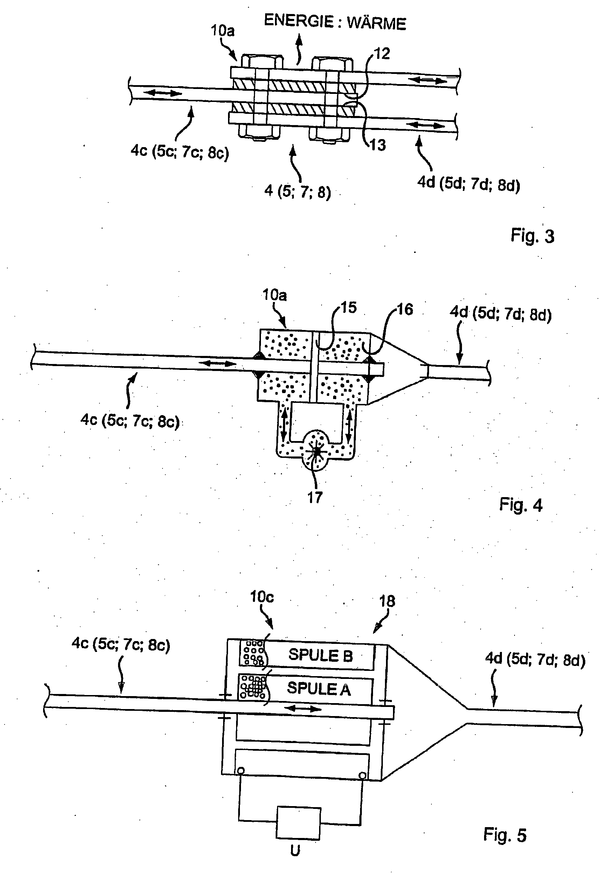

Ein Energiewandler 10, 10b, 11 ist dabei eine Vorrichtung, in der eine Bewegungsenergie eines beweglichen Teils der Strebe 4, 5, 7, 8, der hier durch die gesamte jeweilige Strebe gebildet ist, in seiner Bewegung abgebremst wird und seine Bewegungsenergie zumindest teilweise in eine andere Energieform überführt. Jede Strebe 4, 5, 7, 8 hat daher hier ein karosseriefestes Ende 4a, 5a, 7a, 8a und ein freies Ende 4b, 5b, 7b, 8b, das in dem Energiewandler 10, 10b bzw. 11 gebremst beweglich gehalten ist. Die Streben 4, 5, 7, 8 könnten auch jeweils beispielsweise in der Mitte geteilt sein und dann einen beweglichen Teil 4c, 5c, 7c, 8c und einen karosseriefesten Teil 4d, 5d, 7d, 8d umfassen, wobei dem karosseriefesten Teil der Strebe dann der jeweilige Energiewandler 10, 10b, zugeordnet wäre, wie dies in Figur 4 angedeutet ist.

Durch den oder die jeweiligen Energiewandler 10, 10b, 11 wird einer äußeren Anregung einer Schwingung, etwa durch Überfahren eines Schlaglochs oder einer Schwelle, durch die eine Verwindung in der Karosserie auftritt, entgegengewirkt.

Der Energiewandler 10b gemäß Figur 4 erfüllt eine Abbrems- und Dämpfungsfunktion für die Längsbewegung eines beweglichen Strebenteils 4c, 5c, 7c, 8c. Hier wird die Dämpfung dadurch erreicht, daß der bewegliche Strebenteil 4c, 5c, 7c, 8c an seinem dem Energiewandler zugewandten Ende als Kolben 15 ausgebildet ist, der in ein Druckmittelreservoir 16 mit einem hochviskosen Fluid eintaucht. Dieses kann entweder in einem geschlossenen Druckbehälter angeordnet sein oder wird durch Bewegung des Kolbens 15 über einen Impeller 17 geleitet und treibt ihn an. Der Drehwiderstand des Impellers 17 kann dabei einstellbar sein. An diesem kann durch seine Drehbewegung mittels eines Generators elektrische Energie gewonnen und anderweitig genutzt werden.

Wenn etwa durch einseitiges Überfahren einer Unebenheit auf die Strebe 4, 5, 7, 8 eine Zugkraft auf diese einwirkt, ist sie bestrebt, sich in dieser Richtung zu bewegen. Durch das Fluid im Druckmittelreservoir 16 wird der Auszug jedoch gehemmt und dadurch eine Dämpfung bewirkt. Damit wird der äußeren Anregung entgegengewirkt. Da die Bremswirkung unmittelbar einsetzt, ergeben sich sehr kurze Ansprechzeiten, so daß Anregungsfrequenzen von einigen Hz bis zu einigen 10 Hz effektiv entgegengewirkt werden kann.

In einem weiteren Ausführungsbeispiel (nicht gezeichnet) bildet das erfindungsgemäße Fahrzeug einen Gitterrohrrahmen aus, der als Tragwerk für die Karosserie dient, die dann nicht selbsttragend sein muß. Streben dieses Rahmens können hierbei ebenfalls erfindungsgemäß ausgebildet sein, so daß dann der Rahmen nicht starr ist, sondern, wie unten erläutert, auf äußere Schwingungsanregung dämpfend reagieren kann. Ebenso kann die Erfindung auch auf einen Tragrahmen etwa eines Motorrads angewandt werden.

Auch können mehrere unterschiedliche Energiewandler 10, 10b, 11 an Streben 4, 5, 7, 8 desselben Fahrzeugs 1 zum Einsatz kommen und je nach Raumverhältnissen und sonstigen Parametern kombiniert werden.

Ebenso ist es möglich, neben den gezeigten passiven Energiewandlern an anderen Streben aktive Schwingungstilger zum Einsatz zu bringen, derart, daß dort jeweils einer Strebe 4, 5, 7, 8 eine Aufnahmeeinheit für ihre Längsbewegung und ein Stellglied zur Entgegenwirkung gegen diese Längsbewegung zugeordnet wird.

## Patentansprüche

1. Kraftfahrzeug (1), insbesondere cabriolet-Fahrzeug, mit einer Fahrzeugkarosserie, der zumindest eine Strebe (4;5;7;8) zugeordnet ist, die einen durch im Fahrbetrieb auftretende Längsbeanspruchung gegenüber der Karosserie längsbeweglichen Teil (4c; 5c; 7c; 8c) umfaßt,
wobei
der längsbewegliche Teil (4c;5c;7c;8c) gegenüber einem als Dämpfer wirkenden Energiewandler (10; 10b; 11) zur rein passiven Hemmung einer Streckung oder Stauchung der Strebe beweglich ist, durch den die Relativbewegung des Strebenteils (4c; 5c; 7c; 8c) gegenüber der Karosserie abbremsbar und die Bewegungsenergie der Strebe (4;5;7,8) zumindest teilsweise in eine andere Energieform umwandelbar ist,
und wobei der Energiewandler (10; 10b; 11) zumindest ein von dem beweglichen Teil (4c; 5c; 7c; 8c) der Strebe (4;5;7;8) komprimierbares Druckmittelreservoir (16) und ein von dem beweglichen Teil (4c;5c;7c;8c) der Strebe bewegbares Fluid umfaßt,
**dadurch gekennzeichnet,**
**daß** dem Energiewandler (10; 10b; 11) ein Energiespeicher für durch Umwandlung der kinetischen Energie der Strebe (4;5;7,8) gewonnene Energie zugeordnet ist.

2. Kraftfahrzeug nach Anspruch 1,
**dadurch gekennzeichnete**
**daß** der bewegliche Teil (4c; 5c; 7c; 8c) der Strebe (4; 5; 7; 8) diese zumindest nahezu vollständig umfaßt.

3. Kraftfahrzeug nach einem der Ansprüche 1 bis 2,
**dadurch gekennzeichnet,**
**daß** die Strebe (4;5;7;8) mehrteilig ausgebildet ist und gegeneinander relativbewegliche Teilabschnitte (4c,5c,7c,8c;4d,5d,7d,8d) umfaßt.

4. Kraftfahrzeug nach einem der Ansprüche 1 bis 3,
**dadurch gekennzeichnete**
**daß** einer Strebe (4; 5; 7; 8) eine Aufnahmeeinheit für ihre Längsbewegung und ein Stellglied zur Entgegenwirkung gegen diese Längsbewegung zugeordnet ist.

5. Kraftfahrzeug nach einem der Ansprüche 1 bis 4 mit mehreren Streben,
**dadurch gekennzeichnet,**
**daß** zumindest zwei Streben (4,5 bzw. 7, 8) über einen gemeinsamen Energiewandler (11) miteinander verbunden sind.

## Claims

1. A motor vehicle (1), in particular a cabriolet vehicle, with a vehicle body to which there is attached at least one strut (4; 5; 7; 8) which includes a part (4c; 5c; 7c; 8c) which is longitudinally movable in respect of the bodywork as a result of the longitudinal stress which arises during driving operation,
wherein
the longitudinally movable part (4c; 5c; 7c; 8c) is movable in respect of an energy converter (10; 10b; 11) which acts as a shock absorber for the purely passive inhibition of an extension or compression of the strut, through which the relative movement of the strut part (4c; 5c; 7c; 8c) in respect of the bodywork can be braked and the kinetic energy of the strut (4; 5; 7; 8) can be converted at least partly into another form of energy, and whereas the energy converter (10; 10b; 11) includes at least one pressurising medium reservoir (16) which can be compressed by the movable part (4c; 5c; 7c; 8c) of the strut (4; 5; 7; 8), and includes a fluid which can be moved by the movable part (4c; 5c; 7c; 8c) of the strut,
**characterised in that**
an energy store for energy which is obtained by converting the kinetic energy of the strut (4; 5; 7; 8) is attached to the energy converter (10; 10b; 11).

2. The motor vehicle according to claim 1,
**characterised in that**
the movable part (4c; 5c; 7c; 8c) of the strut (4; 5; 7; 8) encompasses it at least almost entirely.

3. The motor vehicle according to any one of claims 1 or 2,
**characterised in that**
the strut (4; 5; 7; 8) is configured in several parts and includes sections (4c, 5c, 7c, 8c; 4d, 5d, 7d, 8d) that are movable in relation to one another.

4. The motor vehicle according to any one of claims 1 to 3,
**characterised in that**
there is attached to a strut (4; 5; 7; 8) a receiving unit for its longitudinal movement and an actuating element to counteract this longitudinal movement.

5. The motor vehicle according to any one of claims 1 to 4 with several struts,
**characterised in that**
at least two struts (4, 5 and 7, 8 respectively) are connected to one another by means of a common energy converter (11).

## Revendications

1. Véhicule automobile (1), en particulier cabriolet, comportant une carrosserie de véhicule à laquelle est affectée au moins une barre (4 ; 5 ; 7 ; 8) qui comprend un élément (4c ; 5c ; 7c ; 8c) mobile longitudinalement par rapport à la carrosserie sous l'effet d'une sollicitation longitudinale survenant pendant la marche du véhicule, l'élément (4c; 5c; 7c; 8c) mobile longitudinalement se déplaçant par rapport à un convertisseur d'énergie (10; 10b; 11) opérant en tant qu'amortisseur pour l'entrave purement passive d'une extension ou d'une compression des barres, grâce auquel le déplacement relatif de l'élément de barre (4c; 5c; 7c; 8c) par rapport à la carrosserie peut être freiné et grâce auquel l'énergie de déplacement de la barre (4 ; 5 ; 7 ; 8) peut être convertie, au moins partiellement, en une autre forme d'énergie, et dans lequel le convertisseur d'énergie (10; 10b; 11) comprend au moins un réservoir de fluide sous pression (16) pouvant être comprimé par l'élément mobile (4c ; 5c; 7c; 8c) de la barre (4; 5; 7;8) et comprend un fluide déplaçable par l'élément mobile (4c; 5c; 7c; 8c) de la barre,
**caractérisé en ce que**
au convertisseur d'énergie (10 ; 10b ; 11) est affecté un accumulateur d'énergie pour l'énergie obtenue par conversion de l'énergie cinétique de la barre (4; 5; 7, 8).

2. Véhicule automobile selon la revendication 1, **caractérisé en ce que**
l'élément mobile (4c; 5c; 7c; 8c) de la barre (4; 5; 7 ; 8) comprend celle-ci au moins presque entièrement.

3. Véhicule automobile selon l'une des revendications 1 à 2,
**caractérisé en ce que**
la barre (4 ; 5 ; 7 ; 8) est réalisée en plusieurs parties et comprend des sections partielles (4c, 5c, 7c, 8c; 4d, 5d, 7d, 8d) se déplaçant l'une par rapport à l'autre selon un mouvement relatif.

4. Véhicule automobile selon l'une des revendications 1 à 3,
**caractérisé en ce que**
à une barre (4 ; 5 ; 7 ; 8) correspondent une unité de logement pour son déplacement longitudinal et un organe de réglage pour contrecarrer ce déplacement longitudinal.

5. Véhicule automobile selon l'une des revendications 1 à 4 comprenant plusieurs barres,
**caractérisé en ce qu'**au moins deux barres (4, 5 ou 7, 8) sont reliées l'une à l'autre par l'intermédiaire d'un convertisseur d'énergie (11) commun.
